# EUROPÄISCHE PATENTSCHRIFT

(11) **EP 1 419 188 B1**
(45) Veröffentlichungstag und Bekanntmachung des Hinweises auf die Patenterteilung: **21.02.2007**
(21) Anmeldenummer: 02767274.0
(22) Anmeldetag: 30.07.2002
(51) Int. Cl.: C08G 18/40, C08G 18/42, C08G 18/66

(54) **THERMOPLASTISCHE POLYURETHANE**
THERMOPLASTIC POLYURETHANES
POLYURETHANES THERMOPLASTIQUES

(30) Priorität: 10.08.2001 DE 10138298
(43) Veröffentlichungstag der Anmeldung: 19.05.2004
(60) Teilanmeldung: 06112038.2
(73) Patentinhaber: BASF Aktiengesellschaft, 67056 Ludwigshafen (DE)
(72) Erfinder: POHLMANN, Norbert, 49638 Nortrup (DE); PRZYBILSKI, Andreas, 49448 Lemförde (DE); STEINBERGER, Rolf, 49143 Schledehausen (DE)
(86) Internationale Anmeldenummer: PCT/EP2002/008452
(87) Internationale Veröffentlichungsnummer: WO 2003/014179

(56) Entgegenhaltungen:
- EP-A- 0 159 053
- EP-A- 0 846 712
- DE-A- 3 933 204
- US-A- 4 102 868
- US-A- 4 483 970

## Beschreibung

Die Erfindung bezieht sich auf Verfahren zur Herstellung von thermoplastischen Polyurethanen, wobei man
(i) einen thermoplastischen Polyester mit einem Diol (c) umsetzt und anschließend
(ii)das Umsetzungsprodukt aus (i) enthaltend

(b1) Polyesterdiolen mit einem Schmelzpunkt größer 150°C, bevorzugt 151°C bis 260°C, besonders bevorzugt 165°C bis 245°C, sowie gegebenenfalls (c) Diol zusammen mit (b2) Polyetherdiolen und/oder Polyesterdiolen jeweils mit einem Schmelzpunkt kleiner 150°C, bevorzugt 0°C bis 149°C, und einem Molekulargewicht von 501 bis 8000 g/mol sowie gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt. Des weiteren betrifft die Erfindung Produkte enthaltend die erfindungsgemäßen thermoplastischen Polyurethane.

Thermoplastische Elastomere weisen unabhängig von ihrer chemischen Zusammensetzung ein einheitliches Bauprinzip auf. Sie stellen Blockcopolymere dar, bei denen harte Blöcke mit weichen Blöcken in einer Polymerkette verbunden sind. Unter harten Blökken sind Polymersegmente zu verstehen, deren Erweichungstemperatur - Glastemperatur oder Kristallitschmelztemperatur - weit oberhalb der Gebrauchstemperatur liegt. Weiche Blöcke sind Polymersegmente mit Erweichungstemperaturen weit unterhalb der Gebrauchstemperatur, vorzugsweise kleiner 0°C. Die harten Blöcke bilden physikalische Vernetzungen, die während der thermoplastischen Verarbeitung reversibel gespalten und beim Abkühlen neu gebildet werden können.

Typische Beispiele sind Styrol-Butadien-Blockcopolymere mit harten Polystyrol-Blöcken (Glastemperatur ca. 105°C) und weichen Polybutadien-Blöcken (Glastemperatur ca. -90°C) oder thermoplastische Polyurethane (TPU). Letztere Produktgruppe weist als teilkristalline Hartphase das Umsetzungsprodukt eines org. Diisocyanates mit einem niedermolekularen Diol auf und als amorphe Weichphase das Umsetzungsprodukt eines org. Diisocyanates mit einem Polyester- oder Polyetherdiol mit Molekulargewichten von üblicherweise 500 bis 5000 g/mol.

Das Erstarrungsverhalten dieser teilkristallinen Polyurethan-Hartphase ist jedoch sehr variabel und leicht beeinflussbar, wobei in aller Regel Verschlechterungen eintreten. Beispielsweise wirkt sich eine Erhöhung der sogenannten Kennzahl (Verhältnis von mol Isocyanat zu Mol OH-gruppenhaltiger Komponenten) in Bereiche von 1,05 bis 1,20 sehr negativ aus, ebenso wie die Zugabe anderer Polymeren. Auch die gebräuchlichen Herstellverfahren, wie Band- und Extruderverfahren, führen bei gleicher Rezeptur zu TPU mit deutlich unterschiedlichem Kristallisationsverhalten. Bei allen Verarbeitungsverfahren, sei es Spritzguß oder Extrusion, ist jedoch eine gleichmäßig konstante und rasche Erstarrungsgeschwindigkeit ein wesentlicher Einflussfaktor auf die gleichmäßige Qualität der Formteile, auf Eigenschaften wie Härte, Festigkeit, Steifigkeit, Wärmeformbeständigkeit, als auch auf die Wirtschaftlichkeit der Herstellung.

Es existieren vielfältige Bemühungen, dieses nachteilige Verhalten der TPU zu kompensieren. Neben dem Zusatz von sogenannten Nukleierungsmitteln, wie z.B. feinteiligem Talkum, wurde auch versucht, durch Zugabe von anderen, rasch kristallisierenden Polymeren Verbesserungen zu erzielen. Besonders häufig wurden thermoplastische, teilkristalline Polyester verwendet und hier vorzugsweise Polybutylenterephthalat wegen seines zu den üblichen TPU-Verarbeitungstemperaturen sehr gut passenden Schmelzbereiches von 220 bis 230°C.

So beschreibt die DE-A 26 46 647 das Compoundieren von fertigen, hochmolekularen Polyestern und hochmolekularen TPU auf Ein- oder Zweischneckenextrudern. Die EP-A 334 186 und DE-A 41 13 891 offenbaren das Compoundieren von hochmolekularen Polyestern und TPU-Monomerkomponenten. DE-A 41 28 274 beschreiben für derartige Verfahren den Zusatz von bis zu 5 % Diisocyanat im Überschuss. Für eine Verbesserung der Verträglichkeit lehrt EP-A 656 397 die Verwendung eines TPU mit Kennzahlen größer 1.16 und Abmischung mit hochmolekularem Polyester. Diese Verfahren führen zu zweiphasigen Polymermischungen, wobei die Polyesterkomponente, wenn Mengenanteile größer 50 % vorliegen, Teilchengrößen von 10 bis 50 µm oder < 5 µm bei Verwendung von zusätzlichem Diisocyanat aufweist. Derartige Formmassen sollen gegenüber einem nicht modifiziertem TPU erhöhte Festigkeit, Steifigkeit und wärmeformbeständigkeit aufweisen. Sehr nachteilig ist dagegen, dass insbesondere bei Zusatz von Diisocyanat im Überschuss eine deutliche Reduzierung der Erstarrungsgeschwindigkeit eintritt.

EP-A 102 115 und EP-A 846 712 beschreiben die Umsetzung von Polyalkylenterephthalaten mit aliphatischen Polyestern zu Blockcopolyester-estern, die ihrerseits dann mit org. Diisocyanaten umgesetzt werden. Die Polykondensation von Terephthalsäuredimethylester, Butandiol und Polyetherdiol sowie die anschließende Umsetzung des Polyesters mit weiterem Polyetherdiol und Diisocyanaten zu einem hochmolekularen Produkt beschreibt WO 99/51656. Nachteilig bei allen diesen Verfahren sind die langen Reaktionszeiten und die hohen Temperaturen, die leicht zu einer starken Verfärbung der Formmassen führen.

US 4102868, EP-A 159053 und DE-A 3933204 offenbaren die Umsetzung von Isocyanaten mit Polyestern.

DE-A 199 39 112 beschreibt den Abbau von harten thermoplastischen Polyurethanen mit niedermolekularen Diolen und die anschließende Umsetzung mit Isocyanaten zur Herstellung von weichen TPU.

Ziel der vorliegenden Erfindung war es somit, thermoplastische Polyurethane mit einem verbesserten Kristallisationsverhalten der Hartphase sowie einer möglichst konstanten und raschen Erstarrungsgeschwindigkeit bei der Verarbeitung zu entwickeln.

Diese Aufgabe konnte durch die eingangs dargestellten Verfahren gelöst werden.

Unter dem Ausdruck "Schmelzpunkt" ist in dieser Schrift das Maximum des Schmelzpeaks einer Aufheizkurve zu verstehen, die mit einem handelsüblichen Gerät (z.B. DSC 7 / Fa. Perkin-Elmer), bevorzugt DSC-Gerät gemessen und gemäß ISO 11357-3 ausgewertet wurde.

Die in dieser Schrift angegebenen Molekulargewichte stellen die zahlenmittleren Molekulargewichte dar in [g/mol].

Die erfindungsgemäßen thermoplastischen Polyurethane werden dadurch hergestellt, dass man
(i) einen, bevorzugt hochmolekularen, bevorzugt teilkristallinen, thermoplastischen Polyester mit einem Diol (c) umsetzt und anschließend
(ii) das Umsetzungsprodukt aus (i) enthaltend (b1) Polyesterdiol mit einem Schmelzpunkt größer 150°C sowie gegebenenfalls (c) Diol zusammen mit (b2) Polyetherdiolen und/oder Polyesterdiolen jeweils mit einem Schmelzpunkt kleiner 150°C und einem Molekulargewicht von 501 bis 8000 g/mol sowie gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt.

Bevorzugt ist bei der Umsetzung (ii) das Molverhältnis von den Diolen (c) mit einem Molekulargewicht von 62 g/mol bis 500 g/mol zu der Komponente (b2) kleiner 0,2, bevorzugt 0,1 bis 0,01.

Während durch den Schritt (i) die Hartphasen durch den im Schritt (i) eingesetzten Polyester für das Endprodukt zur Verfügung gestellt werden, erfolgt durch den Einsatz der Komponente (b2) im Schritt (ii) der Aufbau der Weichphasen. Die erfindungsgemäße technische Lehre besteht darin, dass Polyester mit einer ausgeprägten, gut kristallisierenden Hartphasenstruktur bevorzugt in einem Reaktionsextruder aufgeschmolzen und mit einem niedermolekularen Diol zunächst abgebaut werden zu kürzeren Polyestern mit freien Hydroxylendgruppen. Hierbei bleibt die ursprüngliche hohe Kristallisationstendenz des Polyesters erhalten und kann anschließend genutzt werden, um bei rasch verlaufender Umsetzung TPU mit den vorteilhaften Eigenschaften zu erhalten, als da sind hohe Zugfestigkeitswerte, niedrige Abriebswerte und wegen des hohen und engen Schmelzbereichs hohe Wärmeformbeständigkeiten und niedrige Druckverformungsreste. Somit werden nach dem erfindungsgemäßen Verfahren bevorzugt hochmolekulare, teilkristalline, thermoplastische Polyester mit niedermolekularen Diolen (c) unter geeigneten Bedingungen in kurzer Reaktionszeit abgebaut zu schnell kristallisierenden Poly-Esterdiolen (b1), die ihrerseits dann mit anderen Polyesterdiolen und/oder Polyetherdiolen und Diisocyanaten in hochmolekulare Polymerketten eingebunden werden.

Dabei weist der eingesetzte thermoplastische Polyester, d.h. vor der Umsetzung (i) mit dem Diol (c), bevorzugt ein Molekulargewicht von 15000 g/mol bis 40000 g/mol sowie bevorzugt einen Schmelzpunkt von größer 160°C, besonders bevorzugt von 170°C bis 260°C auf.

Als Ausgangsprodukt, d.h. als Polyester, der in dem Schritt (i) bevorzugt in geschmolzenem Zustand besonders bevorzugt bei einer Temperatur von 230°C bis 280°C bevorzugt für eine Dauer von 0,1 min bis 4 min, besonders bevorzugt 0,3 min bis 1 min mit dem oder den Diol(en) (c) umgesetzt wird, können allgemein bekannte, bevorzugt hochmolekulare, bevorzugt teilkristalline, thermoplastische Polyester, beispielsweise in granulierter Form, eingesetzt werden. Geeignete Polyester basieren beispielsweise auf aliphatischen ω-Hydroxycarbonsäuren und/oder auf aliphatischen, cycloaliphatischen, araliphatischen und/oder aromatischen Dicarbonsäuren, beispielsweise Milchsäure und/oder Terephthalsäure sowie aliphatischen, cycloaliphatischen, araliphatischen und/oder aromatischen Dialkoholen, beispielsweise Ethandiol-1,2, Butandiol-1,4 und/oder Hexandiol-1,6.

Besonders bevorzugt werden als Polyester eingesetzt: Poly-L-Milchsäure und/oder Polyalkylenterephthalat, beispielsweise Polyethylenterephthalat, Polypropylenterephthalat, Polybutylenterephthalat, insbesondere Polybutylenterephthalat.

Die Herstellung dieser Ester aus den genannten Ausgangsstoffen ist dem Fachmann allgemein bekannt und vielfach beschrieben. Geeignete Polyester sind zudem kommerziell erhältlich.

Den thermoplastischen Polyester schmilzt man bevorzugt bei einer Temperatur von 180°C bis 270°C auf. Die Umsetzung (i) mit dem Diol (c) führt man bevorzugt bei einer Temperatur von 230 °C bis 280°C, bevorzugt 240°C bis 280°C durch.

Als Diol (c) werden in dem Schritt (i) zur Umsetzung mit dem thermoplastischen Polyester und gegebenenfalls im Schritt (ii) allgemein bekannte Diole mit einem Molekulargewicht von 62 bis 500 g/mol eingesetzt, beispielsweise die an späterer Stelle genannten, z.B. Ethylenglykol, 1,3-Propandiol, 1,4-Butandiol, 1,5-Pentandiol, 1,6-Hexandiol, Heptandiol, Oktandiol, bevorzugt Butan-1,4-diol und/oder Ethan-1,2-diol.

Das Gewichtsverhältnis vom thermoplastischen Polyester zum Diol (c) in dem Schritt (i) beträgt üblicherweise 100 : 1,0 bis 100 : 10, bevorzugt 100 : 1,5 bis 100 : 8,0.

Die Umsetzung des thermoplastischen Polyesters mit dem Diol (c) in dem Umsetzungsschritt (i) wird bevorzugt in Gegenwart von üblichen Katalysatoren, beispielsweise solchen, die an späterer Stelle beschrieben werden, durchgeführt. Bevorzugt werden für diese Umsetzung Katalysatoren auf der Basis von Metallen eingesetzt. Bevorzugt führt man die Umsetzung im Schritt (i) in Gegenwart von 0,1 bis 2 Gew.-% Katalysatoren, bezogen auf das Gewicht des Diols (c), durch. Die Umsetzung in Gegenwart derartiger Katalysatoren ist vorteilhaft, um die Reaktion in der zur Verfügung stehenden kurzen Verweilzeit in dem Reaktor, beispielsweise einem Reaktionsextruder durchführen zu können.

Als Katalysatoren kommen beispielsweise für diesen Umsetzungsschritt (i) in Frage: Tetrabutylorthotitanat und/oder Zinn-(II)-Dioctoat, bevorzugt Zinn-dioctoat.

Das Polyesterdiol (b1) als Umsetzungsprodukt aus (i) weist bevorzugt ein Molekulargewicht von 1000 g/mol bis 5000 g/mol auf. Der Schmelzpunkt des Polyesterdiols als Umsetzungsprodukt aus (i) beträgt bevorzugt 150°C bis 260°C, besonders bevorzugt 151°C bis 260°C, insbesondere 165 bis 245°C, d.h. dass das Umsetzungsprodukt des thermoplastischen Polyesters mit dem Diol (c) im Schritt (i) Verbindungen mit dem genannten Schmelzpunkt enthält, die in dem anschließenden Schritt (ii) eingesetzt werden.

Durch die Umsetzung des thermoplastischen Polyesters mit dem Diol (c) in dem Schritt (i) wird die Polymerkette des Polyesters durch das Diol (c) durch Umesterung gespalten. Das Umsetzungsprodukt des TPU weist deshalb freie Hydroxylendgruppen auf und wird erfindungsgemäß in dem weiteren Schritt (ii) zu dem eigentlichen Produkt, dem TPU, weiterverarbeitet.

Die Umsetzung des Reaktionsproduktes aus dem Schritt (i) in dem Schritt (ii) erfolgt erfindungsgemäß durch Zugabe von (a) Isocyanat (a) sowie (b2) Polyetherdiolen und/oder Polyesterdiolen jeweils mit einem Schmelzpunkt kleiner 150°C und einem Molekulargewicht von 501 bis 8000 g/mol sowie gegebenenfalls weiteren Diolen (c) mit einem Molekulargewicht von 62 bis 500, (d) Katalysatoren und/oder (e) Hilfsstoffe zu dem Reaktionsprodukt aus (i). Die Umsetzung von dem Reaktionsprodukt mit dem Isocyanat erfolgt über die in dem Schritt (i) entstandenen Hydroxylendgruppen. Die Umsetzung in dem Schritt (ii) erfolgt bevorzugt bei einer Temperatur von 190 bis 250 °C bevorzugt für eine Dauer von 0,5 bis 5 min, besonders bevorzugt 0,5 bis 2 min, bevorzugt in einem Reaktionsextruder, besonders bevorzugt in dem gleichen Reaktionsextruder, in dem auch der Schritt (i) durchgeführt wurde. Beispielsweise kann die Umsetzung des Schrittes (i) in den ersten Gehäusen eines üblichen Reaktionsextruders erfolgen und an späterer Stelle, d.h. späteren Gehäusen, nach der Zugabe der Komponenten (a) und (b2), die entsprechende Umsetzung des Schrittes (ii) durchgeführt werden. Beispielsweise können die ersten 30 bis 50 % der Länge des Reaktionsextruders für den Schritt (i) verwendet und die restlichen 50 bis 70 % für den Schritt (ii) eingesetzt werden.

Die Umsetzung in dem Schritt (ii) erfolgt bevorzugt bei einem Überschuss der Isocyanatgruppen zu den gegenüber Isocyanaten reaktiven Gruppen. Bevorzugt beträgt in der Umsetzung (ii) das Verhältnis der Isocyanatgruppen der zu den Hydroxylgruppen 1 : 1 bis 1,2 : 1, besonders bevorzugt 1,02 : 1 bis 1,2 . 1.

Bevorzugt führt man die Umsetzungen (i) und (ii) in einem allgemein bekannten Reaktionsextruder durch. Derartige Reaktionsextruder sind beispielhaft in den Firmenschriften von Werner & Pfleiderer oder in der DE-A 2 302 564 beschrieben.

Bevorzugt wird das erfindungsgemäße Verfahren derart durchgeführt, dass man in das erste Gehäuse eines Reaktionsextruders mindestens einen thermoplastischen Polyester, z.B. Polybutylenterephthalat, dosiert und bei Temperaturen bevorzugt zwischen 180°C bis 270°C, bevorzugt 240°C bis 270°C aufschmilzt, in ein nachfolgendes Gehäuse ein Diol (c), z.B. Butandiol, und bevorzugt einen Umesterungskatalysator zugibt, bei Temperaturen zwischen 240°C bis 280°C den Polyester durch das Diol (c) zu Polyesteroligomeren mit Hydroxylendgruppen und Molekulargewichten zwischen 1000 bis 5000 g/mol abbaut, in einem nachfolgenden Gehäuse Isocyanat (a) und (b2) gegenüber Isocyanaten reaktiven Verbindungen mit einem Molekulargewicht von 501 bis 8000 g/mol sowie gegebenenfalls (c) Diole mit einem Molekulargewicht von 62 bis 500, (d) Katalysatoren und/oder (e) Hilfsstoffe zudosiert und anschließend bei Temperaturen von 190 bis 250°C den Aufbau zu den erfindungsgemäßen thermoplastischen Polyurethanen durchführt.

Bevorzugt werden im Schritt (ii) mit Ausnahme der im Umsetzungsprodukt von (i) enthaltenen (c) Diole mit einem Molekulargewicht von 62 bis 500 keine (c) Diole mit einem Molekulargewicht von 62 bis 500 zugeführt.

Der Reaktionsextruder weist in dem Bereich, in dem der thermoplastische Polyester geschmolzen wird, bevorzugt neutrale und/oder rückwärtsfördernde Knetblöcke und Rückförderelemente auf sowie in dem Bereich, in dem der thermoplastische Polyester mit dem Diol umgesetzt wird, bevorzugt Schneckenmischelemente, Zahnscheiben und/oder Zahnmischelemente in Kombination mit Rückförderelementen.

Nach dem Reaktionsextruder wird die klare Schmelze üblicherweise mittels einer Zahnradpumpe einer Unterwassergranulierung zugeführt und granuliert.

Die erfindungsgemäßen thermoplastischen Polyurethane zeigen optisch klare, einphasige Schmelzen, die rasch erstarren und infolge der teilkristallinen Polyesterhartphase schwach opake bis weiß-undurchsichtige Formkörper bilden. Das rasche Erstarrungsverhalten ist ein entscheidender Vorteil zu bekannten Rezepturen und Herstellverfahren für thermoplastische Polyurethane. Das rasche Erstarrungsverhalten ist so ausgeprägt, dass selbst Produkte mit Härten 50 bis 60 Shore A im Spritzguß mit Zykluszeiten kleiner 35s verarbeitbar sind. Auch in der Extrusion, z.B. bei der Blasfolienherstellung, treten keinerlei TPU-typische Probleme wie Verkleben oder Verblocken der Folien oder Schläuche auf.

Der Anteil des thermoplastischen Polyesters in dem Endprodukt, d.h. dem thermoplastischen Polyurethan, beträgt bevorzugt 5 bis 75 Gew.-%. Besonders bevorzugt stellen die erfindungsgemäßen thermoplastischen Polyurethane Produkte der Reaktion eines Gemisches enthaltend 10 bis 70 Gew.-% des Umsetzungsproduktes aus (i), 10 bis 80 Gew.-% (b2) und 10 bis 20 Gew.-% (a) dar, wobei die Gewichtsangaben auf das Gesamtgewicht des Gemisches enthaltend (a), (b2), (d), (e) und das Umsetzungsprodukt aus (i) bezogen sind.

Die erfindungsgemäßen thermoplastischen Polyurethane weisen bevorzugt eine Härte von Shore 45 A bis Shore 78 D, besonders bevorzugt 50 A bis 75 D auf.

Bevorzugt weisen die erfindungsgemäßen thermoplastischen Polyurethane die folgende Struktureinheit (II) auf: 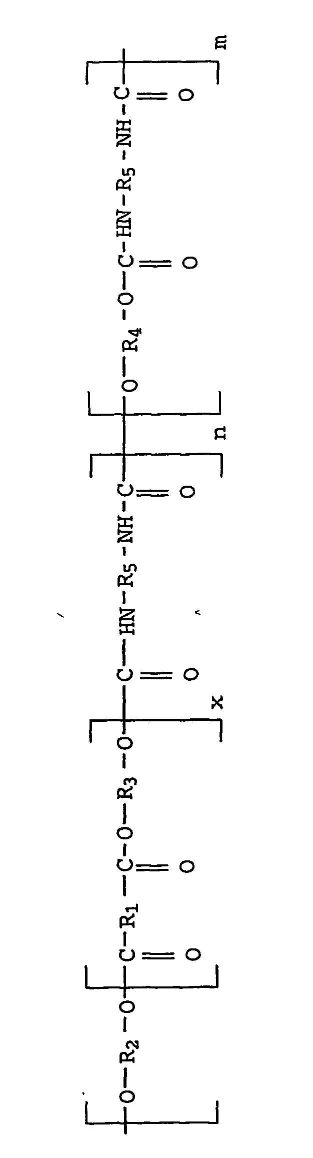 mit den folgenden Bedeutungen für R₁, R₂, R₃, R⁴, R⁵, n, m und X:
- R₁:: Kohlenstoffgerüst mit 2 bis 15 Kohlenstoffatomen, bevorzugt eine Alkylengruppe mit 2 bis 15 Kohlenstoffatomen und/oder ein aromatischer Rest mit 6 bis 15 Kohlenstoffatomen,
- R₂:: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere -CH₂-CH₂- und/oder -CH₂-CH₂-CH₂-CH₂-,
- R₃:: gegebenenfalls verzweigtkettige Alkylengruppe mit 2 bis 8 Kohlenstoffatomen, bevorzugt 2 bis 6, besonders bevorzugt 2 bis 4 Kohlenstoffatomen, insbesondere -CH₂-CH₂- und/oder -CH₂-CH₂-CH₂-CH₂-,
- R₄:: Rest, der sich aus dem Einsatz von Polyetherdiolen und/oder Polyesterdiolen mit jeweils Molekulargewichten zwischen 501 g/mol und 8000 g/mol als (b2) oder aus dem Einsatz von Alkandiolen mit 2 bis 12 Kohlenstoffatomen ergibt,
- R₅:: Kohlenstoffgerüst mit 2 bis 15 Kohlenstoffatomen, bevorzugt eine Alkylengruppe mit 2 bis 15 Kohlenstoffatomen und/oder ein bivalenter aromatischer Rest mit 6 bis 18 Kohlenstoffatomen, besonders bevorzugt mit 6 bis 15 Kohlenstoffatomen,
- X:: eine ganze Zahl aus dem Bereich 5 bis 30,
- n, m:: eine ganze Zahl aus dem Bereich 5 bis 20.

Die Reste R₁, R₂ und R₃ werden durch das Umsetzungsprodukt des thermoplastischen Polyesters mit dem Diol (c) in (i), der Rest R₄ durch die Ausgangskomponenten (b2) und gegebenenfalls (c) und der Rest R₅ durch das eingesetzte Isocyanat definiert.

Das erfindungsgemäße Produkt des Schrittes (ii), d.h. das TPU, kann extrudiert, abgekühlt und granuliert werden.

Die Verarbeitung der erfindungsgemäß hergestellten TPU zu den gewünschten Folien, Fasern, Formteile, Verkleidungen in Automobilen, Rollen, Dichtungen, Kabelstecker, Faltenbälge, Schläuche, Kabelummantelungen, Schleppkabel, Riemen oder Dämpfungselemente, insbesondere Folien, kann nach üblichen Verfahren erfolgen, wie z. B. Spritzguß, Extrusion, Spinnverfahren oder Sinterverfahren, das auch als Powder-slush-Verfahren bekannt ist.

Die bei der Herstellung der TPU üblicherweise verwendeten Komponenten (a), (b2), (c), (d) und/oder (e) sollen im Folgenden beispielhaft beschrieben werden:
a) Als organische Isocyanate (a) werden übliche aliphatische, cycloaliphatische, araliphatische und/oder aromatische Isocyanate, bevorzugt Diioscyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1, 5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexandiisocyanat, 4,4'-, 2,4'- und/oder 2,2'-Dicyclohexylmethandiisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat, bevorzugt 2,2'-, 2,4'- und/oder 4,4'-Diphenylmethandiisocyanat (MDI) und/oder Hexamethylendiisocyanat (HDI).
b) Als gegenüber Isocyanaten reaktive Verbindungen (b2) werden zusätzlich zu den erfindungsgemäßen Polyesterdiolen (b1) beispielsweise Polyhydroxylverbindungen, auch als Polyole bezeichnet, mit Molekulargewichten von 501 bis 8000, bevorzugt 700 bis 6000, insbesondere 800 bis 4000, und bevorzugt einer mittleren Funktionalität von 1,8 bis 2,6, bevorzugt 1,9 bis 2,2, insbesondere 2, eingesetzt. Unter dem Ausdruck "Funktionalität" ist insbesondere die Anzahl an aktiven Wasserstoffatomen, insbesondere Hydroxylgruppen ,zu verstehen. Bevorzugt setzt man als (b2) Polyesterole und/oder Polyetherole und/oder Polycarbonatdiole ein, besonders bevorzugt Polyesterdiole, beispielsweise Polycaprolacton, und/oder Polyetherpolyole, bevorzugt Polyetherdiole, beispielsweise solche auf der Basis von Ethylenoxid, Propylenoxid und/oder Butylenoxid, bevorzugt Polypropylenglykol, insbesondere Polyetherole. Besonders bevorzugt werden als (b2) Verbindungen eingesetzt, zu zum Aufbau einer Weichphase im TPU geeignet sind, beispielsweise Copolyester basierend auf Adipinsäure und Gemischen aus Ethandiol-1.2 und Butandiol-1.4, Copolyester basierend auf Adipinsäure und Gemischen aus Butandiol-1.4 und Hexandiol-1.6, Polyester basierend auf Adipinsäure und 3-Methyl-Pentandiol-1.5 und/oder Polytetramethylenglykol (Polytetrahydrofuran, PTHF), besonders bevorzugt Copolyester basierend auf Adipinsäure und Gemischen aus Ethandiol-1.2 und Butandiol-1.4 und/oder Polytetramethylenglykol (PTHF).
c) Als Diole (c) können allgemein als Kettenverlängerer bekannte Verbindungen eingesetzt werden, beispielsweise Alkandiole mit 2 bis 12 Kohlenstoffatomen, vorzugsweise mit 2, 3, 4 oder 6 Kohlenstoffatomen, wobei auch Mischungen der genannten Verbindungen eingesetzt werden können. Beispielhaft seien folgende Verbindungen genannt: Ethan-1,2-diol, Propan-1,3-diol, Hexan-1,6-diol, Butan-1,4-diol.
d) Geeignete Katalysatoren, welche insbesondere die Reaktion zwischen den NCO-Gruppen der Diisocyanate (a) und den Hydroxylgruppen der Aufbaukomponenten (b2) und (b1) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester. Abgesehen von der Umsetzung im Schritt (i) werden die Katalysatoren üblicherweise in Mengen von 0,0001 bis 5 Gew.-Teilen pro 100 Gew.-Teile Polyhydroxylverbindung (b) eingesetzt.
   Geeignete Katalysatoren, welche die Abbaureaktion der bevorzugt hochmolekularen, bevorzugt teilkristallinen, thermoplastischen Polyester mit der Komponente (c) beschleunigen, sind insbesondere organische Metallverbindungen wie Titansäureester, z. B. Tetrabutylorthotitanat, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche.
e) Neben Katalysatoren können den Aufbaukomponenten (a) und (b2) auch übliche Hilfsmittel (e) hinzugefügt werden. Genannt seien beispielsweise oberflächenaktive Substanzen, Flammschutzmittel, Antistatika, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher.

Nähere Angaben über die oben genannten Hilfsmitteln sind der Fachliteratur zu entnehmen.

Erfindungsgemäß sind des weiteren Mischungen enthaltend die erfindungsgemäßen thermoplastische Polyurethane sowie mindestens einen weiteren thermoplastischen Werkstoff, beispielsweise Polyolefine, Polyester, Polyamid, Polyoxymethylen, Polystyrol und/oder Styrolcopolymere.

Die erfindungsgemäßen Vorteile sollen anhand der folgenden Beispiele dargestellt werden.

### Beispiele

Die Herstellung der nachfolgend beschriebenen Beispiele 1 bis 21 wurde auf einem Doppelschneckenextruder Typ ZSK 58 der Firma Werner & Pfleiderer durchgeführt. Die Länge des Extruderverfahrensteils betrug 12 Gehäuse, die Länge der Gehäuse selbst war der 4-fache Schneckendurchmesser. Der Schneckenaustrag aus dem Extruder wurde mittels einer Zahnradpumpe durchgeführt; die Granulierung erfolgte in einer üblichen Unterwassergranuliereinrichtung. Das anfallende Granulat wurde dann in einem Wirbelbett-Trockner bei Temperaturen zwischen 60° bis 100°C und Verweilzeiten von 5 bis 10 min. auf Wassergehalte < 0,03 % getrocknet und anschließend 15 Std. bei 80°C getempert.

Die Temperaturen des Extrudergehäuses 1 betrug 260°C, der Gehäuse 2-4 250°C, des Gehäuses 5 240°C, der Gehäuse 6-12, einschließlich der Schmelzeaustragseinrichtung, 230°C. Unter diesen Bedingungen resultierte bei einem Durchsatz von ca. 200 kg/h und einer Drehzahl von 200 Upm eine Schmelzetemperatur von 220-230°C.

Als teilkristalliner, hochmolekularer Polyester wurde ein handelsübliches Polybutylenterephthalat (Ultradur® B 4500 / BASF Aktiengesellschaft) verwendet, als niedermolekulares Diol zum Abbau des hochmolekularen PBT Butandiol-1,4 und als aromatisches Diisocyanat 4,4'-Diisocyanatodiphenylmethan (MDI). Die verwendeten Polydiole (PDO) sind in Tabelle 1 beschrieben und charakterisiert.

**Tabelle 1:**

| Bezeichnung | Zusammensetzung | Zahlenmittel. Mol.-Gewicht | OH-Zahl |
|---|---|---|---|
| | | Mₙ (g/mol) | (mg K0H/1 g) |
| PD0 1 | Polyester aus Adipinsäure, Ethylenglykol und Butandiol-1.4 (Molverhältnis 1:1) | 2000 | 56.1 |
| PD0 2 | Polyester aus Adipinsäure, Butandiol-1.4 und Hexandiol-1.6 (Molverhältnis 2:1) | 2000 | 56.1 |
| PD0 3 | Polyester aus Adipinsäure und 3-Methyl-Pentandiol-1.5 | 2000 | 56.1 |
| PD0 4 | Polyetherdiol auf Basis Polytetramethylenglykol | 1000 | 112.2 |

Im Beispiel 1 wird der Abbau des Ultradur^{®} B 4500 durch Butandiol-1.4 beschrieben und die Abbauprodukte charakterisiert.

In das Gehäuse 1 des Doppelschneckenextruders wurde kontinuierlich Ultradur®-Granulat dosiert, in das Gehäuse 3 Butandiol-1.4 zusammen mit Zinn-dioctoat als Katalysator zur Beschleunigung des Abbaues und aus dem geöffneten Gehäuse 5 Schmelzeproben entnommen. Die Verweilzeit der Schmelze (Gehäuse 1-5) betrug ca. 44 Sekunden.

**Tabelle 2:**

| Proben-Nr. | ULTRADUR^{®} B 4500 kg/h | Butandiol-1.4 kg/h | Zinn-dioctoat g/h |
|---|---|---|---|
| 1 | 40 | 0 | 0 |
| 2 | 40 | 1.20 | 4.0 |
| 3 | 40 | 1.80 | 4.0 |
| 4 | 40 | 2.40 | 4.0 |

Zur Bestimmung von nicht umgesetztem Butandiol-1.4 wurde je 10 g Schmelzeprobe nach Pulverisierung in 30 g Isopropanol suspendiert und 48 Std. bei Raumtemperatur zur vollständigen Extraktion des Butandiols gerührt. In der Isopropanollösung wurde Butandiol gaschromatographisch bestimmt. Der unlösliche Anteil wurde abfiltriert, mit Isopropanol gewaschen und mehrere Stunden bei 100°C vollständig getrocknet. Von diesen extrahierten Proben wurden folgende Bestimmungen durchgeführt:
- Viskositätszahl VZ:: Lösungsviskosität (ml/g) einer 0,5%igen Lösung in Phenol/Chlorbenzol (1:1) bei 25°C, gemessen mit einem Ubbelohde-Viskosimeter
- Endgruppenanalyse:: Auflösung in Dichlorbenzol bei 190°C, Umsetzung mit Essigsäureanhydrid und Titration mit 0,1 nNa0H-Lösung
- GPC-Analyse:: Elutionsmittel Hexafluorisopropanol + 0,5 % Tri-fluoressigsäure-Kaliumsalz, Kalibrierung mit eng verteilten PMMA-Standards

**Tabelle 3:**

| Proben- Nr. | Gehalt an nicht umgesetztem Butandiol | Viskositätszahl VZ | Endgruppen | | Mn-Werte | |
|---|---|---|---|---|---|---|
| | (Gew.-%) | (ml/g) | Hydroxyl mmol/kg | Säure mmol/kg | aus Endgruppen | aus GPC |
| 1 | - | 101 | 60.6 | 32.1 | 21600 | 16800 |
| 2 | 0.29 | 26.7 | 485 | 16.0 | 4000 | 3700 |
| 3 | 0.75 | 19.6 | 675 | 17.8 | 2900 | 2700 |
| 4 | 0.85 | 16.0 | 848 | 21.4 | 2300 | 2200 |

Aus den Werten der Tabelle 3 ist zu entnehmen, dass nach dem erfindungsgemäßen Verfahren das hochmolekulare Polybutylenterephthalat innerhalb der kurzen Verweilzeit zu Polyesterketten mit im wesentlichen Hydroxyl-Endgruppen und Mn-Werten von 2000 bis 4000 abgebaut werden kann.

In den nachfolgenden Beispielen 2 bis 4 wird beschrieben, wie die Proben Nr. 2, 3 und 4 erfindungsgemäß weiter umgesetzt werden, indem im Gehäuse 5 des Doppelschneckenextruders Polyesterdiol, MDI und Zinn-dioctoat zugesetzt werden.

**Tabelle 4:**

| Beispiel- Nr. | Ultradur^{®} B 4500 | Butandiol | Zinn-dioctoat | | Polyesterdiol PD02 | MDI | Molverhältnis MDI / (BD0+PD02) |
|---|---|---|---|---|---|---|---|
| | | | Gehäuse 3 | Gehäuse 5 | | | |
| | kg/h | kg/h | g/h | g/h | kg/h | kg/h | |
| 2 | 40 | 1.20 | 4.0 | 4.0 | 128.7 | 20.80 | 1.07 |
| 3 | 40 | 1.80 | 4.0 | 4.0 | 128.7 | 22.58 | 1.07 |
| 4 | 40 | 2.40 | 14.0 | 4.0 | 128.7 | 24.36 | 1.07 |
| 5 | 40 | - | - | 4.0 | 128.7 | 17.23 | 1.07 |

| | | | | | | | |
|---|---|---|---|---|---|---|---|
| BD0 = Butandiol | | | | | | | |

Beim nicht erfindungsgemäßen Beispiel 5 wurde Ultradur B 4500 ohne Abbau durch Butandiol, aber sonst gleichen Reaktionsbedingungen mit PD0 2 und MDI umgesetzt. Im Gegensatz zu den optisch klaren und einphasigen Schmelzen aus den Beispielen 2 bis 4 war die Schmelze gemäß Beispiel 5 opak-weiß, undurchsichtig und zweiphasig. Bereits nach wenigen Minuten Laufzeit trat in der Unterwassergranuliereinrichtung Verklumpung der extrem klebrigen Granulatkörner auf und der Versuch musste abgebrochen werden. Das bis dahin angefallene Produkt war im Spritzguß nicht verarbeitbar. Zu vergleichenden Messungen wurden bei ca. 190-200°C 2 mm dicke Prüfplatten gepresst.

Zur Bestimmung der mechanischen Eigenschaften wurden die Versuchsprodukte in üblicher Weise im Spritzguß zu Prüfkörpern verarbeitet, die vor der Prüfung 20 Std. bei 100°C getempert wurden.

Die Prüfungen wurden nach folgenden Bedingungen durchgeführt:
- Härte:: Shore A oder Shore D, gemessen nach DIN 53505
- ZF:: Zugfestigkeit (MPa), gemessen nach DIN 53504
- RF:: Reißdehnung (%), gemessen nach DIN 53504
- WRF:: Weiterreißfestigkeit (N/mm), gemessen nach DIN 53515
- Abrieb:: Abrieb (mm3), gemessen nach DIN 53516
- DSC-Werte:: Gemessen mit einem DSC 7-Gerät der Fa. Perkin-Elmer und ausgewertet nach ISO 11357-3;
Heiz- bzw. Kühlgeschwindigkeiten: 20 °K/min.
T_{M}: Schmelzpeakmaximum (°C) aus der 2. Aufheiz-Kurve
T_{Kmax} : Kristallisationspeakmaximum (°C) aus der Abkühlkurve

Diese Bedingungen gelten für die Beispiele 2 bis 5 wie auch für alle nachfolgenden Beispiele.

**Tabelle 5:**

| Beispiel-Nr. | Härte | ZF | RD | WRF | Abrieb | VZ | DSC-Werte | |
|---|---|---|---|---|---|---|---|---|
| | | | | | | | T_{M} | T_{Kmax} |
| 2 | 67 A | 19 | 850 | 41 | 57 | 329 | 209 | 165 |
| 3 | 71 A | 23 | 880 | 50 | 47 | 328 | 196 | 134 |
| 4 | 73 A | 25 | 840 | 51 | 47 | 337 | 186 | 119 |
| 5 | 58 A | 8 | 800 | 10 | > 500 | 222 | 212 | 159 |

Die Werte der erfindungsgemäßen Versuchsprodukte (Beispiele 2-4) zeigen ein hervorragendes Eigenschaftsniveau, insbesondere bezüglich des Erstarrungsverhaltens im Spritzguß.

Die Werte des nicht erfindungsgemäßen Beispiels 5 zeigen, dass es sich lediglich um eine physikalische Mischung eines hochmolekularen PBT mit einer hochmolekularen Poly-urethanweichphase handelt, woraus neben der extremen Klebrigkeit auch die niedrige Zugfestigkeit, niedrige Weiterreißfestigkeit und der extrem hohe Abrieb resultieren.

In den nachfolgenden Beispielen 6 bis 9 soll gezeigt werden, dass nach dem erfindungsgemäßen Verfahren Produkte im Härtebereich Shore 44 D bis 75 D hergestellt werden können.

**Tabelle 6:**

| Beispiel- Nr. | Ultra dur^{®} B 4500 | Butandiol | Zinn-dioctoat | | Polyesterdiol PD02 | MDI | Molverhältnis MDI / (BD0+PD02) |
|---|---|---|---|---|---|---|---|
| | | | Gehäuse 3 | Gehäuse 5 | | | |
| | kg/h | kg/h | g/h | g/h | kg/h | kg/h | |
| 6 | 65.7 | 3.30 | 4.0 | 4.0 | 56.0 | 17.1 | 1.06 |
| 7 | 75.0 | 4.50 | 4.0 | 4.0 | 43.7 | 19.0 | 1.06 |
| 8 | 87.0 | 5.22 | 4.0 | 4.0 | 30.60 | 19.43 | 1.06 |
| 9 | 99.0 | 5.94 | 4.0 | 4.0 | 19.40 | 20.06 | 1.06 |

Zusätzlich zu den in Tabelle 6 genannten Stoffen wurde in das Gehäuse 8 des Doppelschneckenextruders über ein seitlich angebrachtes Schneckendosiergerät 1.45 kg/h einer Pulvermischung, bestehend aus 25 % eines feinteiligen Talkums (Talkum IT extra / Fa. Omya), 25 % eines Antioxidans (Irganox® 1010 / Fa. Ciba-Geigy) und 50 % eines Gleit- und Entformungshilfsmittels (Uniwax 1760 / Fa. Uniqema), zugegeben. Der Gesamtdurchsatz betrug dann 144-146 kg/h.

**Tabelle 7:**

| Beispiel-Nr. | Härte | ZF | RD | WRF | Abrieb | VZ | DSC-Werte | |
|---|---|---|---|---|---|---|---|---|
| | | | | | | | T_{M} | T_{Kmax} |
| 6 | 44 D | 32 | 590 | 112 | 15 | 271 | 190 | 140 |
| 7 | 54 D | 38 | 410 | 151 | 18 | 249 | 189 | 142 |
| 8 | 66 D | 49 | 440 | 183 | 16 | 241 | 193 | 150 |
| 9 | 75 D | 45 | 430 | 251 | 20 | 229 | 195 | 155 |

In den nachfolgenden Beispielen 10 bis 17 soll gezeigt werden, dass nach dem erfindungsgemäßen Verfahren Produkte im Härtebereich Shore 50 A bis 80 A hergestellt werden können.

**Tabelle 8:**

| Beispiel-Nr. | Ultradur^{®} B 4500 | Butandiol | Zinn-dioctoat | | Polyesterdiol PD01 | MDI | Molverhältnis MDI / (BD0+PD01) |
|---|---|---|---|---|---|---|---|
| | | | Gehäuse 3 | Gehäuse 5 | | | |
| | kg/h | kg/h | g/h | G/h | kg/h | kg/h | |
| 10 | 20.0 | 1.20 | 4.0 | 4.0 | 146.9 | 24.24 | 1.116 |
| 11 | 27.0 | 1.62 | 4.0 | 4.0 | 139.3 | 24.48 | 1.116 |
| 12 | 33.0 | 1.98 | 4.0 | 4.0 | 132.7 | 24.66 | 1.116 |
| 13 | 40.0 | 2.40 | 4.0 | 4.0 | 125.0 | 24.90 | 1.116 |

**Tabelle 9:**

| Beispiel-Nr. | Ultradur^{®} B 4500 | Butandiol | Zinn-dioctoat | | Polyesterdiol PD0 2 | Polyesterdiol PD0 3 | MDI | Molverhältnis MDI / |
|---|---|---|---|---|---|---|---|---|
| | | | Gehäuse 3 | Gehäuse 5 | | | | |
| | kg/h | kg/h | g/h | g/h | kg/h | kg/h | kg/h | (BD0+PD02+PD03) |
| 14 | 22.0 | 1.10 | 4.0 | 4.0 | 118.2 | 29.5 | 23.05 | 1.07 |
| 15 | 27.5 | 1.38 | 4.0 | 4.0 | 114.1 | 28.5 | 23.20 | 1.07 |
| 16 | 33.0 | 1.65 | 4.0 | 4.0 | 109.2 | 27.3 | 23.18 | 1.07 |
| 17 | 36.5 | 1.86 | 4.0 | 4.0 | 106.4 | 26.6 | 23.33 | 1.07 |

Zusätzlich zu den in Tabelle 8 und 9 genannten Stoffen wurde in das Gehäuse 8 des Doppelschneckenextruders 2.00 kg/h einer Pulvermischung eingebracht, die bereits bei den Beispielen 6 bis 9 beschrieben wurde.

**Tabelle 10:**

| Beispiel-Nr. | Härte | ZF | RD | WRF | Abrieb | VZ | DSC-Werte | |
|---|---|---|---|---|---|---|---|---|
| | | | | | | | T_{M} | T_{Kmax} |
| 10 | 57 A | 23 | 880 | 41 | 36 | 461 | 200 | 155 |
| 11 | 65 A | 25 | 820 | 46 | 35 | 476 | 195 | 140 |
| 12 | 71 A | 23 | 850 | 53 | 33 | 472 | 200 | 150 |
| 13 | 77 A | 31 | 860 | 62 | 35 | 458 | 197 | 144 |
| 14 | 52 A | 19 | 1240 | 24 | 104 | 387 | 195 | 139 |
| 15 | 56 A | 18 | 1330 | 31 | 82 | 354 | 198 | 145 |
| 16 | 65 A | 26 | 1060 | 37 | 68 | 361 | 201 | 153 |
| 17 | 69 A | 28 | 1080 | 41 | 68 | 348 | 197 | 155 |

Die Produkte gemäß der Beispiele 10 bis 17 zeigen neben guten mechanischen Eigenschaften ein ausgeprägtes und sehr gutes Erstarrungs- und Kristallisationsverhalten, das sich auf das Verarbeitungsverhalten im Spritzguß und in der Extrusion sehr positiv auswirkt, wie nachfolgend noch gezeigt werden soll.

Die Beispiele 14 bis 17 belegen, dass auch Mischungen von Polyesterdiolen mit unterschiedlicher chemischer Struktur in dem erfindungsgemäßen Verfahren verwendet werden können. Dies ist manchmal von Bedeutung, um beim Lagern der Produkte eine Nachkristallisation der ursprünglich amorphen Polyurethanweichphase und damit eine Nachhärtung zu unterdrücken.

Neben Polyesterdiolen können auch Polyetherdiole oder Mischungen Polyesterdiol/Polyetherdiol in dem erfindungsgemäßen Verfahren eingesetzt werden, wie an den Beispielen 18 bis 20 erläutert werden soll.

**Tabelle 11:**

| | Ultradur^{®} B 4500 | Butandiol | Zinn-dioctoat | | Polyesterdiol PD04 | MDI | Molverhältnis MDI / (BD0+PD04) |
|---|---|---|---|---|---|---|---|
| Beispiel-Nr. | | | Gehäuse 3 | Gehäuse 5 | | | |
| | kg/h | kg/h | g/h | g/h | kg/h | kg/h | |
| 18 | 34.0 | 2.76 | 4.0 | 4.0 | 118.2 | 39.48 | 1.06 |
| 19 | 50.0 | 4.02 | 4.0 | 4.0 | 101.6 | 38.79 | 1.06 |
| 20 | 70.0 | 5.64 | 4.0 | 4.0 | 80.74 | 38.02 | 1.06 |

Zusätzlich zu den in Tabelle 11 genannten Stoffen wurde in das Gehäuse 8 des Doppelschnecken-extruders 2.00 kg/h einer Pulvermischung eingebracht, wie sie bei den Beispielen 6 bis 9 beschrieben wurde.

**Tabelle 12:**

| Beispiel-Nr. | Härte | ZF | RD | WRF | Abrieb | VZ | DSC-Werte | |
|---|---|---|---|---|---|---|---|---|
| | | | | | | | T_{M} | T_{Kmax} |
| 18 | 70 A | 40 | 710 | 38 | 30 | 1603 | 178 | 71 |
| 19 | 80 A | 43 | 610 | 64 | 27 | 1282 | 176 | 75 |
| 20 | 90 A | 50 | 470 | 74 | 30 | 640 | 180 | 80 |

Im nachfolgenden Beispiel 21 soll gezeigt werden, dass ein handelsübliches Polyethylenterephthalat (Polyestertype RT 51 / Fa. Kosa) nach dem erfindungsgemäßen Verfahren umgesetzt werden kann.

**Tabelle 13:**

| | PET RT 51 | Butandiol | Zinn-dioctoat | | Polyesterdiol PD0 2 | Polyesterdiol PD0 3 | MDI | Molverhältnis MDI / (BD0+PD0 2 +PD0 3) 2 +PD0 3) |
|---|---|---|---|---|---|---|---|---|
| Beispiel-Nr. | | | Gehäuse 3 | Gehäuse 5 | | | | |
| | kg/h | kg/h | g/h | g/h | kg/h | kg/h | kg/h | |
| 21 | 36.5 | 2.92 | 12.0 | 4.0 | 105.4 | 26.3 | 25.33 | 1.03 |

Wegen des höheren Schmelzbereiches von Polyethylenterephthalat wurde das Temperaturprofil des Doppelschneckenextruders in folgender Weise verändert:

| | |
|---|---|
| Gehäuse 1 bis 4 : | 270°C |
| Gehäuse 5 : | 260°C |
| Gehäuse 6 bis 12 : | 250°C |
| Schmelzeaustragseinrichtung : | 230°C |

Zusätzlich zu den in Tabelle 13 genannten Stoffen wurde in das Gehäuse 8 des Doppelschnecken-extruders 2.00 kg/h einer Pulvermischung eingebracht, wie sie bei den Beispielen 6 bis 9 beschrieben wurde.

**Tabelle 14:**

| Beispiel-Nr. | Härte | ZF | RD | WRF | Abrieb | VZ | DSC-Werte | |
|---|---|---|---|---|---|---|---|---|
| | | | | | | | T_{M} | T_{Kmax} |
| 21 | 68 A | 15 | 960 | 24 | 120 | 230 | 238 | 196 |

In den nachfolgenden Beispielen 22 bis 24 soll gezeigt werden, dass ein aliphatisches Diisocyanat-Hexamethylendiisocyanat-1.6 (HDI) - nach dem erfindungsgemäßen Verfahren umgesetzt werden kann.

**Tabelle 15:**

| | Ultradur^{®} B 4500 | Butandiol | Zinn-dioctoat | | Polyesterdiol PD02 | HDI | Molverhältnis HDI /(BD0+PD02) |
|---|---|---|---|---|---|---|---|
| Beispiel-Nr. | | | Gehäuse 3 | Gehäuse 5 | | | |
| | kg/h | kg/h | g/h | g/h | kg/h | kg/h | |
| 22 | 37.5 | 2.25 | 4.0 | 12.0 | 95.8 | 12.38 | 1.01 |
| 23 | 45.0 | 2.70 | 4.0 | 12.0 | 87.7 | 12.53 | 1.01 |
| 24 | 52.5 | 3.15 | 4.0 | 12.0 | 79.5 | 12.69 | 1.01 |

**Tabelle 16:**

| Beispiel-Nr. | Härte ZF | | RD | WRF | Abrieb | VZ | DSC-Werte | |
|---|---|---|---|---|---|---|---|---|
| | | | | | | | T_{M} | T_{Kmax} |
| 22 | 79 A | 13 | 950 | 41 | 100 | 150 | 179 | 71 |
| 23 | 84 A | 15 | 880 | 50 | 52 | 163 | 179 | 68 |
| 24 | 89 A | 19 | 820 | 60 | 41 | 148 | 182 | 63 |

Die vorliegenden Beispiele 2 bis 24 zeigen, dass nach dem erfindungsgemäßen Verfahren Blockcopolymere hergestellt werden können, die sich von den handelsüblichen thermoplastischen Polyurethanen dadurch unterscheiden, dass das übliche Hartphasensegment, bestehend aus Butandiol/MDI-Einheiten, ausgetauscht wurde gegen teilkristalline, rasch kristallisierende, harte Polyestersegmente.

Es können Produkte hergestellt werden, die einen Härtebereich von Shore 50 A bis Shore 75 D überstreichen und dabei elastomeres Verhalten aufweisen, insbesondere auch die vorteilhaften Eigenschaften der handelsüblichen, thermoplastischen Polyurethane wie z.B. hohe Festigkeiten in Kombination mit hoher Reißdehnung, hohe Weiterreißfestigkeiten und hohe Abriebsbeständigkeiten.

Der Vorteil gegenüber den handelsüblichen thermoplastischen Polyurethanen beruht jedoch auf dem engen Schmelzbereich und der Kristallisationstendenz der teilkristallinen Polyesterhartphase, so dass eine problemlose und rasche Verarbeitung im Spritzguß und in der Extrusion gegeben ist, auch wenn es sich um sehr weiche Produkte im Härtebereich Shore 50 A bis Shore 75 A handelt.

Diese vorteilhaften Verarbeitungseigenschaften sollen in den nachfolgenden Beispielen 25 bis 26 erläutert werden.

In der Schrift DE-A 199 39 112 werden thermoplastische Polyurethane im Härtebereich Shore 50 A bis 75 A beschrieben. Die Versuchsprodukte gemäß Beispiel 9, 10 und 11 der DE-A 199 39 112 basieren auf Polyesterdiol PD0 1 wie die Produkte gemäß Beispiel 10, 11 und 12 der vorliegenden Erfindung.

**Tabelle 17:**

| **DEA 199 39 112** | **Härte** |
|---|---|
| - Beispiel 9 | 73 A |
| - Beispiel 10 | 66 A |
| - Beispiel 11 | 58 A |

| **Erfindungsgemäß** | |
|---|---|
| - Beispiel 10 | 57 A |
| - Beispiel 11 | 65 A |
| - Beispiel 12 | 71 A |

### Beispiel 25 - Verarbeitbarkeit im Spritzguß

Die in Tabelle 17 erwähnten Produkte wurden auf einer Spritzgußmaschine, Typ ES 330/125 der Fa. Engel, unter optimierten Bedingungen zu einer Rundscheibe mit einem Durchmesser von 120 mm und einer Dicke von 2 mm verarbeitet. Optimierte Bedingungen bedeuten, dass für jedes einzelne Produkt die Einspritzbedingungen, das Temperaturprofil des Spritz-Aggregates und des Heißkanals sowie die Werkzeugoberflächentemperaturen solange variiert und optimiert wurden, bis eine homogene, plane Rundscheibe mit guter Entformbarkeit und Formstabilität resultierte. Die nach einem solchen Verfahren ermittelten Zykluszeiten stellen einen guten Vergleichsmaßstab für die Beurteilung der Verarbeitbarkeit dar, wobei kürzere Zykluszeiten positiv zu beurteilen sind.

**Tabelle 18:**

| | DEA 199 39 112 | | | Erfindungsgemäß | | |
|---|---|---|---|---|---|---|
| | Beispiele | | | Beispiele | | |
| | 11 | 10 | 9 | 10 | 11 | 12 |
| Härte (Shore) | 58 A | 66 A | 73 A | 57 A | 65 A | 71 A |
| Zykluszeit (Sek.) | 100 | 90 | 75 | 45 | 40 | 35 |

### Beispiel 26 - Verarbeitbarkeit in der Extrusion (Blasfolienherstellung)

Auf einer Laboranlage der Fa. Brabender mit Aufschmelzextruder, Blasfolienkopf und Abzugsvorrichtung wurden die in Tabelle 15 beschriebenen Produkte zu Blasfolien verarbeitet. Nach entsprechender Optimierung des Extrudertemperaturprofils, der Ringspaltbreite des Blasfolienkopfes, der Blasluftmenge und der Abzugsgeschwindigkeit konnten in allen Fällen einwandfreie Blasfolien hergestellt und aufgewickelt werden. Im Falle der Produkte gemäß DE-A 199 39 112 verklebten die glasklaren Blasfolien beim Aufwikkeln jedoch so stark miteinander, dass die Spule zu einem späteren Zeitpunkt nicht mehr ohne Zerstörung der Folie abgewickelt werden konnte. Wegen der starken Verklebung war der Folienschlauch auch nicht mehr aufblasbar.

Die erfindungsgemäßen Produkte dagegen ergaben leicht opake Folienschläuche ohne jegliche Verklebungsneigung. Die Spulen waren zu einem späten Zeitpunkt jederzeit gut abwickelbar, der Folienschlauch selbst problemlos aufblasbar. Zwischen den einzelnen Härteabstufungen waren keine Unterschiede im Hinblick auf Verklebungstendenzen zu erkennen.

## Patentansprüche

1. Verfahren zur Herstellung von thermoplastischen Polyurethanen, **dadurch gekennzeichnet, dass** man
(i) einen thermoplastischen Polyester mit einem Diol (c) mit einem Molekulargewicht von 62 g/mol bis 500g/mol umsetzt und anschließend
(ii)das Umsetzungsprodukt aus (i) enthaltend (b1) Polyesterdiol mit einem Schmelzpunkt größer 150°C sowie gegebenenfalls (c) Diol zusammen mit (b2) Polyetherdiolen und/oder Polyesterdiolen jeweils mit einem Schmelzpunkt kleiner 150 °C und einem Molekulargewicht von 501 bis 8000 g/mol sowie gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt.

2. Verfahren nach Anspruch 1, **dadurch gekennzeichnet, dass** das Molverhältnis von den (c) Diolen mit einem Molekulargewicht von 62 g/mol bis 500 g/mol zu der Komponente (b2) bei der Umsetzung (ii) kleiner 0,2 ist.

3. Verfahren nach Anspruch 1, **dadurch gekennzeichnet, dass** der thermoplastische Polyester ein Molekulargewicht von 15000 g/mol bis 40000 g/mol aufweist.

4. Verfahren gemäß Anspruch 1, **dadurch gekennzeichnet, dass** man als thermoplastischen Polyester Polyalkylenterephthalat und/oder Poly-L-Milchsäure einsetzt.

5. Verfahren gemäß Anspruch 1, **dadurch gekennzeichnet, dass** man den thermoplastischen Polyester bei einer Temperatur von 180°C bis 270°C aufschmilzt und die Umsetzung (i) mit dem Diol (c) bei einer Temperatur von 240°C bis 280°C durchführt.

6. Verfahren gemäß Anspruch 1, **dadurch gekennzeichnet, dass** man die Umsetzung des thermoplastischen Polyesters mit dem Diol (c) in Gegenwart eines Katalysators durchführt.

7. Verfahren gemäß Anspruch 1, **dadurch gekennzeichnet, dass** das Polyesterdiol (b1) als Umsetzungsprodukt aus (i) ein Molekulargewicht von 1000 g/mol bis 5000 g/mol aufweist.

8. Verfahren gemäß Anspruch 1, **dadurch gekennzeichnet, dass** man in (i) und gegebenenfalls in (ii) als Diol (c) Butan-1,4-diol und/oder Ethan-1,2-diol einsetzt.

9. Verfahren nach Anspruch 1, **dadurch gekennzeichnet, dass** man die Umsetzungen (i) und (ii) in einem Reaktionsextruder durchführt.

10. Verfahren nach Anspruch 9, **dadurch gekennzeichnet, dass** der Reaktionsextruder in dem Bereich, in dem der thermoplastische Polyester geschmolzen wird, neutrale und/oder rückwärtsfördernde Knetblöcke und Rückförderelemente sowie in dem Bereich, in dem der thermoplastische Polyester mit dem Diol umgesetzt wird, Schneckenmischelemente, Zahnscheiben und/oder Zahnmischelemente in Kombination mit Rückförderelementen aufweist.

11. Verfahren nach Anspruch 1, **dadurch gekennzeichnet, dass** in der Umsetzung (ii) das Verhältnis der Isocyanatgruppen zu den Hydroxylgruppen 1 : 1 bis 1,2 : 1 beträgt.

12. Thermoplastische Polyurethane erhältlich durch ein Verfahren gemäß einem der Ansprüche 1 bis 11.

13. Thermoplastische Polyurethane gemäß Anspruch 12, die einen Härtebereich von Shore 45 A bis Shore 78 D umfassen.

14. Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente enthaltend thermoplastische Polyurethane gemäß Anspruch 12oder 13.

15. Mischungen enthaltend thermoplastische Polyurethane gemäß einem der Ansprüche 12 oder 13 sowie mindestens einen weiteren thermoplastischen Werkstoff.

## Claims

1. A process for the preparation of thermoplastic polyurethanes, wherein
(i) a thermoplastic polyester is reacted with a diol (c) and then
(ii)the reaction product of (i) comprising (b1) polyesterdiol having a melting point greater than 150°C and, if appropriate, (c) diol together with (b2) polyetherdiols and/or polyesterdiols, each having a melting point of less than 150°C and a molecular weight of from 501 to 8 000 g/mol and, if appropriate, further (c) diols having a molecular weight of from 62 to 500 g/mol are reacted with (a) isocyanate, in the presence or absence of (d) catalysts and/or (e) assistants.

2. The process according to claim 1, wherein the molar ratio of the (c) diols having a molecular weight of from 62 to 500 g/mol to the component (b2) in the reaction (ii) is less than 0.2.

3. The process according to claim 1, wherein the thermoplastic polyester has a molecular weight of from 15 000 to 40 000 g/mol.

4. The process according to claim 1, wherein the thermoplastic polyester used is a polyalkylene terephthalate and/or a poly-L-lactic acid.

5. The process according to claim 1, wherein the thermoplastic polyester is melted at from 180 to 270°C and the reaction (i) with the diol (c) is carried out at from 240 to 280°C.

6. The process according to claim 1, wherein the reaction of the thermoplastic polyester with the diol (c) is carried out in the presence of a catalyst.

7. The process according to claim 1, wherein the polyesterdiol (b1) as a reaction product from (i) has a molecular weight of from 1 000 to 5 000 g/mol.

8. The process according to claim 1, wherein butane-1,4-diol and/or ethane-1,2-diol are used as diol (c) in (i) and, if appropriate, in (ii).

9. The process according to claim 1, wherein the reactions (i) and (ii) are carried out in a reaction extruder.

10. The process according to claim 9, wherein the reaction extruder has neutral and/or backward-conveying kneading blocks and backward-conveying elements in the region in which the thermoplastic polyester is melted and screw mixing elements, toothed disks and/or toothed mixing elements in combination with backward-conveying elements in the region in which the thermoplastic polyester is reacted with the diol.

11. The process according to claim 1, wherein, in the reaction (ii), the ratio of the isocyanate groups to the hydroxyl groups is from 1 : 1 to 1.2 : 1.

12. A thermoplastic polyurethane obtainable by a process according to any of claims 1 to 11.

13. The thermoplastic polyurethane according to claim 12, which has a hardness range of from Shore 45 A to Shore 78 D.

14. A film, shaped article, roller, fiber or cladding in an automobile, hose, cable plug, bellows, trailing cable, cable sheath, seal, belt or damping element comprising the thermoplastic polyurethane according to claim 12 or 13.

15. A mixture comprising the thermoplastic polyurethane according to either of claims 12 or 13 and at least one further thermoplastic material.

## Revendications

1. Procédé de préparation de polyuréthannes thermoplastiques, **caractérisé en ce que**
(i) on fait réagir un polyester thermoplastique avec un diol (c), et ensuite
(ii) on fait réagir le produit réactionnel de (i) contenant (b1) du polyester-diol présentant un point de fusion supérieur à 150°C ainsi qu'éventuellement (c) du diol conjointement à (b2) des polyétherdiols et/ou polyesterdiols ayant chacun un point de fusion inférieur à 150°C et un poids moléculaire de 501 à 8000 g/mole ainsi qu'éventuellement d'autres (c) diols présentant un poids moléculaire de 62 à 500 g/mole, avec (a) de l'isocyanate, éventuellement en présence (d) de catalyseurs et/ou (e) d'adjuvants.

2. Procédé suivant la revendication 1, **caractérisé en ce que** le rapport molaire entre les (c) diols présentant un poids moléculaire de 62 g/mole à 500 g/mole et les composants (b2) lors de la réaction (ii) est inférieur à 0,2.

3. Procédé suivant la revendication 1, **caractérisé en ce que** le polyester thermoplastique présente un poids moléculaire de 15 000 g/mole à 40 000 g/mole.

4. Procédé suivant la revendication 1, **caractérisé en ce que**, comme polyester thermoplastique, on met en oeuvre du téréphtalate de polyalkylène et/ou de l'acide poly-L-lactique.

5. Procédé suivant la revendication 1, **caractérisé en ce qu'**on fait fondre le polyester thermoplastique à une température de 180°C à 270°C et on effectue la réaction (i) avec le diol (c) à une température de 240°C à 280°C.

6. Procédé suivant la revendication 1, **caractérisé en ce qu'**on effectue la réaction du polyester thermoplastique avec le diol (c) en présence d'un catalyseur.

7. Procédé suivant la revendication 1, **caractérisé en ce que** le polyesterdiol (b1) présente, comme produit réactionnel de (i), un poids moléculaire de 1000 g/mole à 5000 g/mole.

8. Procédé suivant la revendication 1, **caractérisé en ce que**, dans (i) et éventuellement dans (ii), on met en oeuvre, comme diol (c), du butane-1,4-diol et/ou de l'éthane-1,2-diol.

9. Procédé suivant la revendication 1, **caractérisé en ce qu'**on effectue les réactions (i) et (ii) dans une extrudeuse réactionnelle.

10. Procédé suivant la revendication 9, **caractérisé en ce que** l'extrudeuse réactionnelle présente, dans la zone dans laquelle le polyester thermoplastique est mis à fondre, des blocs de pétrissage neutres et/ou à transport vers l'arrière et des éléments de transport vers l'arrière ainsi que, dans la zone dans laquelle le polyester thermoplastique est mis à réagir avec le diol, des éléments mélangeurs à vis, des disques dentés et/ou des éléments mélangeurs dentés en combinaison avec des éléments de transport vers l'arrière.

11. Procédé suivant la revendication 1, **caractérisé en ce que**, dans la réaction (ii), le rapport entre les groupes isocyanate et les groupes hydroxyle est de 1/1 à 1,2/1.

12. Polyuréthannes thermoplastiques que l'on peut obtenir par un procédé suivant l'une des revendications 1 à 11.

13. Polyuréthannes thermoplastiques suivant la revendication 12, qui comportent une gamme de duretés de Shore 45 A jusqu'à Shore 78 D.

14. Feuilles, pièces façonnées, rouleaux, fibres, habillages dans des automobiles, tuyaux souples, connecteurs de câble, soufflets, câbles souples, gainages de câble, organes d'étanchéité, courroies ou éléments d'amortissement contenant des polyuréthannes thermoplastiques suivant la revendication 12 ou 13.

15. Mélanges contenant des polyuréthannes thermoplastiques suivant l'une des revendications 12 ou 13, ainsi qu'au moins une autre matière thermoplastique.
